# EUROPÄISCHE PATENTANMELDUNG

(11) **EP 2 608 395 A1**
(43) Veröffentlichungstag der Anmeldung: **26.06.2013**
(21) Anmeldenummer: 11194187.8
(22) Anmeldetag: 19.12.2011
(51) Int. Cl.: H02M 7/5387, H02P 27/08

(54) **Verfahren zum Ansteuern einer Stromrichterschaltung**

(71) Anmelder: Siemens Aktiengesellschaft, 80333 München (DE)
(72) Erfinder: Köpken, Hans-Georg, Dr., 91056 Erlangen (DE)

(57) **Zusammenfassung**

Die Erfindung betrifft ein Verfahren zum Ansteuern einer Stromrichterschaltung (4) mit wenigstens zwei Submodulen (28, 30,32) in Reihenschaltung, die über eine Induktivität (26) elektrische Leistung aus einer eine Gleichspannung abgebenden Leistungsquelle (8) bezieht. Dabei weist jedes Submodul (28, 30,32) eingangsseitig eine einphasige Halbbrücke (48) und lastseitig eine einphasige Vollbrücke (50) auf und die Halbbrücke (48) und die Vollbrücke (50) sind gleichspannungsseitig sowie parallel hierzu ein Zwischenkreiskondensator (24) geschaltet. Das Verfahren umfasst die Schritte Regeln eines Stromes (22) aus der elektrischen Leistungsquelle (8) basierend auf der von den Vollbrücken (50) der Submodule (28,30, 32) an die elektrischen Lasten (10,12,14) abzugebenden elektrischen Leistung (74), Erfassen eines negativen Leistungsflusses (72) aus einer elektrischen Last (10,12,14) in den jeweils angeschlossenen Wechselrichter (50) und zeitweises Rückführen der elektrischen Leistung (74) aus der Vollbrücke (50) in Richtung der elektrischen Leistungsquelle (8), während der negative Leistungsfluss (72) erfasst wird.

## Beschreibung

Die Erfindung betrifft ein Verfahren zum Ansteuern einer Stromrichterschaltung, eine Vorrichtung zum Ansteuern einer Stromrichterschaltung, eine Stromrichterschaltung und ein Fahrzeug.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Gemäß der Erfindung wird ein negativer Leistungsfluss von einer an einen der Vollbrücken angeschlossenen elektrischen Last zu einer elektrischen Leistungsquelle erfasst und während dieses negativen Leistungsflusses zeitweises von den Vollbrücken elektrische Leistung in Richtung der Leistungsquelle zurückgeführt.

Der Erfindung liegt die Überlegung zugrunde, dass ein Strom aus der elektrischen Leistungsquelle basierend auf einer von den Vollbrücken an die angeschlossenen Lasten abzugebenden elektrischen Wirkleistung geregelt werden könnte. Diese abzugebende Wirkleistung muss aufgrund der Verbrauchereigenschaft der angeschlossenen Lasten stets positiv sein. Durch die Regelung der Wirkleistung sind damit die Richtungen der Spannungen und der Ströme an jedem Submodul des modularen Umrichters fest vorgegebenen. Die Richtung der Teilspannungen an den einzelnen Vollbrücken ist durch die Abgabespannung der elektrischen Leistungsquelle vorgegeben und kann nicht einfach umgekehrt werden. Die Richtung des Stromes aus der elektrischen Leistungsquelle ergibt sich aus der Notwendigkeit, dass Wirkleistung abgegeben werden soll, so dass durch die zuvor erwähnte Wirkleistungsregelung zwar die Höhe des Stromes aus der elektrischen Leistungsquelle geregelt werden kann, nicht aber seine Richtung.

Der Erfindung liegt ferner die Erkenntnis zugrunde, dass die Vollbrücken in den Submodulen durch die Umwandlung der Teilspannungen in Wechselspannung an die angeschlossenen Verbraucher nicht nur Wirkleistungen sondern auch Blindleistung abgeben, deren Leistungsflussrichtung sich periodisch umkehrt. Wie bereits erläutert, lässt sich der Strom aus der elektrischen Leistungsquelle aufgrund der Wirkleistungsregelung nicht umkehren, so dass dem Submodul mit der Vollbrücke eingangsseitig ständig Wirkleistung zugeführt wird. Jedoch fließt im Falle einer negativen Blindleistungsflussperiode elektrische Leistung von der ausgangsseitig angeschlossenen elektrischen Last in die Vollbrücke, so dass elektrische Leistung in das Submodul mit der Vollbrücke von beiden Seiten fließt. Da die so dem Submodul zugeführte elektrische Energie aus dem Submodul nicht abfließen kann, müsste sie im Submodul zwischengespeichert werden. Dies würde es jedoch erfordern, für jedes Submodul entsprechend leistungsfähige elektrische Energiespeicher bereitzustellen. Derartige Energiespeicher würden die Komplexität der gesamten Stromrichterschaltung jedoch hinsichtlich Bauraum, Kosten und Gewicht unzulässig steigern, was insbesondere im Bereich der Fahrzeugtechnik nicht akzeptable wäre.

Zwar könnte versucht werden, die elektrischen Lasten ohne Blindleistungsbedarf ausgelegen. Dies würde aber insbesondere in der Antriebstechnik die Verwendung besonders günstiger Antriebskonzepte, wie die Asynchronmotoren, von vorn herein von der Verwendung ausschließen.

Die Erfindung schlägt demgegenüber vor, wenigstens zeitweise elektrische Leistung von den Lasten in die elektrische Leistungsquelle zurückzuführen, wenn eine elektrische Last mit Blindleistungsbedarf elektrische Leistung in seine entsprechende Vollbrücke einspeist. Auf diese Weise ist ein konsequenter Leistungsfluss durch die Vollbrücke geschaffen, so dass weniger elektrische Energie in den einzelnen Submodulen mit den Vollbrücken zwischengespeichert werden muss.

Die Erfindung gibt daher ein Verfahren zum Ansteuern einer Stromrichterschaltung mit wenigstens zwei Submodulen in Reihenschaltung, die über eine Induktivität elektrische Leistung aus einer eine Gleichspannung abgebenden Leistungsquelle bezieht, an. Dabei weist jedes Submodul eingangsseitig eine einphasige Halbbrücke und lastseitig eine einphasige Vollbrücke auf und die Halbbrücke und die Vollbrücke sind gleichspannungsseitig sowie parallel hierzu ein Zwischenkreiskondensator geschaltet. Das Verfahren umfasst die Schritte Regeln eines Stromes aus der elektrischen Leistungsquelle basierend auf der von den Vollbrücken der Submodule an die elektrischen Lasten abzugebenden elektrischen Leistung, Erfassen eines negativen Leistungsflusses aus einer elektrischen Last in den jeweils angeschlossenen Wechselrichter und zeitweises Rückführen der elektrischen Leistung aus den Vollbrücken in Richtung der elektrischen Leistungsquelle, während der negative Leistungsfluss erfasst wird.

Durch das angegebene Verfahren kann eine Stromrichterschaltung rein auf die an den Lasten benötigte Wirkleistung geregelt werden, ohne dass leistungsfähige Energiespeicher in den einzelnen Submodulen mit den Vollbrücken notwendig wären. Dies senkt die Kosten, den Bauraum und das Gewicht der entsprechenden Stromrichterschaltung.

In einer Weiterbildung der Erfindung umfasst das angegebene Verfahren den Schritt Umkehren des Stromes aus der Leistungsquelle zum Rückführen der elektrischen Leistung aus den Vollbrücken. Auf diese Weise ist das Verfahren technisch besonders einfach umsetzbar, da sich die Teilspannungen an den einzelnen Vollbrücken aufgrund ihrer Reihenschaltung zur elektrischen Leistungsquelle nicht ohne Weiteres umkehren ließen.

In einer besonderen Weiterbildung der Erfindung sind die Beträge der Amplituden des Stromes bei der Stromumkehr gleich. In einer bevorzugten Weiterbildung der Erfindung umfasst das angegebene Verfahren Betreiben der elektrischen Lasten als Generatoren zum Rückführen der elektrischen Leistung. Diese Verfahrensvariante ist besonders günstig für Lasten, die die von den Vollbrücken abgegebene elektrische Leistung reversibel speichern und gegebenenfalls in die Vollbrücken zurückführen können. Die elektrische Leistungszufuhr aus der elektrischen Leistungsquelle zu beispielsweise einem Elektromotor, der auch als Generator wirken kann, könnte dann kurzfristig unterbrochen werden, so dass der abbremsende und als Generator wirkende Elektromotor dann Strom in die Vollbrücken einspeist und so den Strom aus der Leistungsquelle umkehrt.

In einer anderen Weiterbildung der Erfindung wird das zeitweise Rückführen der elektrischen Leistung aus den Vollbrücken in zyklischen Abständen durchgeführt. Dieser Verfahrensausführung liegt die Überlegung zugrunde, dass auch die von den elektrischen Lasten in die Vollbrücken zurückgeführte elektrische Leistung irgendwo im Gesamtsystem gespeichert werden muss. Die Anforderung, diese zurückgeführte elektrische Leistung zu speichern kann durch das zyklische Rückführen der elektrischen Leistung aus den Vollbrücken minimiert werden, da sich die Richtung des Leistungsflusses in vorgegebenen Abständen umkehrt und so ein kleiner mittlerer Leistungsfluss erreicht werden kann, der zu einer vergleichsweise geringen energetischen Aufladung des Gesamtsystems führt.

In einer besonderen Weiterbildung der Erfindung sind die zyklischen Abstände konstant, so dass ein mittlerer Leistungsfluss von Null erreicht werden kann.

In einer bevorzugten Weiterbildung der Erfindung ist die zeitliche Dauer der Rückführung der elektrischen Leistung in jedem Zyklus abhängig von der abzugebenden elektrischen Leistung aus der elektrischen Leistungsquelle. Da der Verlauf der abzugebenden elektrischen Leistung aus der elektrischen Leistungsquelle aus dem messbaren Strom und der messbaren Spannung aus der elektrische Leistungsquelle hergeleitet werden kann, braucht aus diesem Verlauf lediglich die Dauer der Rückführung der elektrischen Leistung in jedem Zyklus ausgelesen zu werden. Dies kann beispielsweise dadurch erfolgen, dass der Verlauf der abzugebenden elektrischen Leistung per Pulsweitenmodulation in ein pulsweitenmoduliertes Signal umgewandelt wird, wobei aus dem Tastgrad des pulsweitenmodulierten Signals direkt die Dauer der Rückführung der elektrischen Leistung in jedem Zyklus ablesbar ist.

In einer anderen Weiterbildung der Erfindung steigt beziehungsweise sinkt die Dauer der Rückführung der elektrischen Leistung in jedem Zyklus mit der Leistungsabgabe der elektrischen Leistungsquelle, so dass zwischen der Dauer und der Leistungsabgabe ein eineindeutiger funktioneller Zusammenhang geschaffen ist.

In einer alternativen Weiterbildung der Erfindung umfasst das angegebene Verfahren Erfassen einer elektrischen Energie, die in einem Zwischenkreiskondensator gespeichert ist, der an die den negativen Leistungsfluss empfangenden Vollbrücke angeschlossen ist und Rückführen von elektrischer Leistung, wenn die gespeicherte elektrische Energie einen bestimmten Wert übersteigt. Auf diese Weise ist ein Kriterium geschaffen, mit der die Rückführung der elektrischen Leistung in die elektrische Leistungsquelle adaptiv basierend auf der Belastung der Vollbrücken eingestellt werden kann, so dass Energiespeicher in den Vollbrücken gezielt auf minimale Werte ausgelegt werden können.

In einer zusätzlichen Weiterbildung der Erfindung umfasst das angegebene Verfahren Beenden der Rückführung der elektrischen Energie, wenn die wenn die gespeicherte elektrische Energie einen weiteren Wert unterschreitet, so dass gesichert ist, dass auch der durch die Rückführung der elektrischen Leistung in die elektrische Leistungsquelle entstehende Leistungsfluss die mit den Vollbrücken verbundenen Zwischenkreiskondensatoren nicht zu hoch belastet.

In einer besonderen Weiterbildung der Erfindung sind die Momentanwerte der aus der elektrischen Leistungsquelle in die elektrischen Lasten zugeführten Leistung während des negativen Leistungsflusses größer, als während eines positiven Leistungsflusses.

Die Erfindung gibt auch eine Vorrichtung zur Durchführung eines angegebenen Verfahrens an.

In einer Weiterbildung der Erfindung weist die Vorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die Erfindung gibt auch eine Stromrichterschaltung mit wenigstens zwei Submodulen in Reihenschaltung, die über eine Induktivität elektrische Leistung aus einer eine Gleichspannung abgebenden Leistungsquelle bezieht, an. Dabei weist jedes Submodul eingangsseitig eine einphasige Halbbrücke und lastseitig eine einphasige Vollbrücke auf und die Halbbrücke und die Vollbrücke sind gleichspannungsseitig sowie parallel hierzu ein Zwischenkreiskondensator geschaltet. Die Stromrichterschaltung umfasst eine angegebene Vorrichtung.

In einer Weiterbildung der Erfindung umfasst die Stromrichterschaltung eine eingangsseitig zur elektrischen Leistungsquelle verschaltete Kapazität zum Aufnehmen der rückgespeisten elektrischen Leistung. Diese Kapazität kann die zurückgespeiste Leistung aus den elektrischen Lasten aufnehmen, wenn die elektrische Leistungsquelle nicht dazu vorgesehen ist, elektrische Leistung aufzunehmen.

Die Erfindung gibt auch ein Fahrzeug an, das einen elektrischen Antrieb, eine elektrische Leistungsquelle und eine angegebene Stromrichterschaltung zum Anpassen der elektrischen Leistung aus der elektrischen Leistungsquelle für den elektrischen Antrieb umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einem beispielhaften modularen Umrichter,
- FIG 2: einen Schaltplan eines Submoduls in dem modularen Umrichter der FIG 1,
- FIG 3: ein schematisches Diagramm mit zeitlichen Strom-, Spannungsverläufen gemäß dem Stand der Technik,
- FIG 4: ein schematisches Diagramm mit zeitlichen Leistungsverläufen gemäß dem Stand der Technik, und
- FIG 5: ein schematisches Diagramm mit zeitlichen Leistungsverläufen gemäß der Erfindung zeigt.

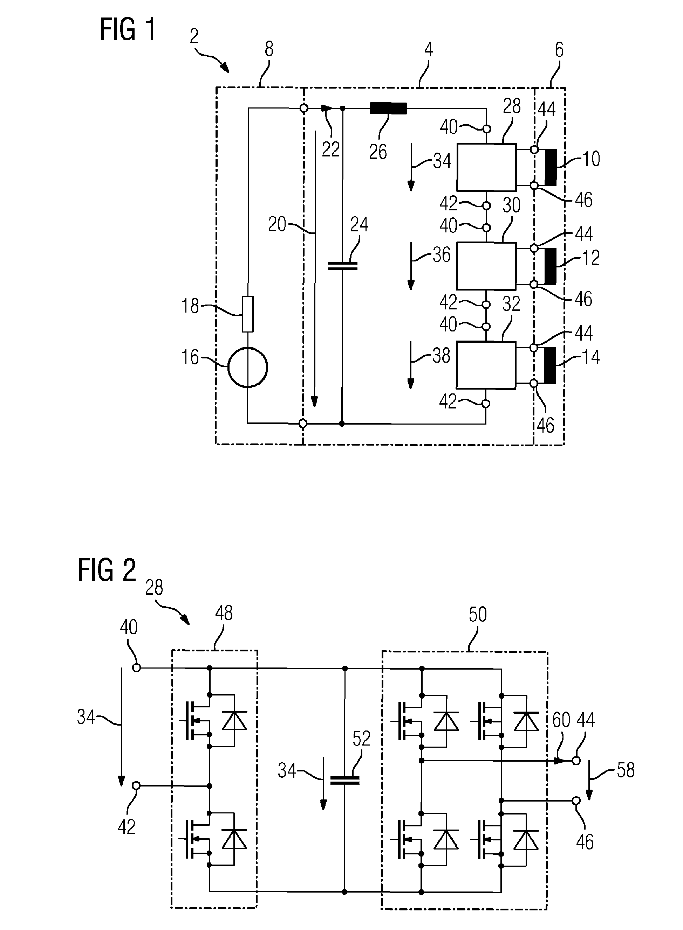

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 weist eine erste Last 10, eine zweite Last 12 und eine dritte Last 14 auf.

Die elektrische Leistungsquelle 8 ist in der vorliegenden Ausführung eine Batterie 8, die sich in eine Spannungsquelle 16 mit einem dazu in Reihe angeschlossenen Innenwiderstand 18 zerlegen lässt. Die Batterie 8 legt an die Stromrichterschaltung 4 eine Batteriespannung 20 an und gibt an die Stromrichterschaltung 4 einen Batteriestrom 22 ab.

Die Stromrichterschaltung 4 weist eingangsseitig einen parallel zur Batterie 8 geschalteten Energiespeicher in Form eines Kondensators 24 auf. An den Kondensator 24 schließt sich parallel eine Reihenschaltung aus einer Induktivität 26, die beispielsweise eine Spule sein kann, einem ersten Submodul 28, einem zweiten Submodul 30 und einem dritten Submodul 32 an. An den Submodulen 28 bis 32 fällt entsprechend eine erste Teilspannung 34, eine zweite Teilspannung 36 und eine dritte Teilspannung 38 ab. Ferner sind an das erste bis dritte Submodul 28 bis 32 entsprechend die erste bis dritte Last 10 bis 14 angeschlossen. Basierend auf den Teilspannungen 34 bis 38 versorgen die Submodule 28 bis 32 auf diese Weise die Lasten 10 bis 14 mit elektrischer Energie in einer noch zu beschreibenden Weise. Für die Anzahl der Submodule und Lasten wurde in der vorliegenden Ausführung drei gewählt. Die Stromrichterschaltung 4 kann jedoch eine beliebig hohe Anzahl an Submodulen 28 bis 32 besitzen und damit eine beliebig hohe Anzahl an Lasten 10 bis 14 speisen. Je mehr Submodule 28 bis 32 jedoch in der Reihenschaltung verschaltet sind, desto kleiner werden die entsprechenden Teilspannungen 34 bis 38.

Jedes Submodul 28 bis 32 weist eine erste Eingangsklemme 40, eine zweite Eingangsklemme 42, eine erste Ausgangsklemme 44 und eine zweite Ausgangsklemme 46 auf. Während über den ersten und zweiten Eingangsklemmen 40, 42 jeweils die Teilspannungen 34 bis 38 abfallen, sind an die ersten und zweiten Ausgangsklemmen 44, 46 die Lasten 10 bis 14 angeschlossen.

Es wird auf FIG 2 Bezug genommen, die beispielhaft den Aufbau des Submoduls 28 in der Stromrichterschaltung 2 der FIG 1 zeigt. Das zweite und das dritte Submodul 30, 32 sind analog zum ersten Submodul 28 aufgebaut. In FIG 2 werden zu FIG 1 gleiche Elemente mit gleichen Bezugszeichen versehen und nicht noch einmal beschrieben.

Das erste Submodul 28 weist eine erste Halbbrücke 48, eine Vollbrücke 50 und einen Zwischenkreiskondensator 52 auf, die miteinander parallel verschaltet sind.

Die erste Halbbrücke 48 weist einen ersten Schalter 54 und einen dazu in Reihe geschalteten zweiten Schalter 56 auf. Die Schalter bestehen in der vorliegenden Ausführung jeweils aus einem nicht näher referenzierten MOSFET (Metalloxid-Feldeffekttransistor) und jeweils einer dazu parallel geschalteten Freilaufdiode.

Die erste Teilspannung 34 ist an den ersten Schalter 54 angelegt, während der zweite Schalter 56 in Reihe zwischen dem ersten Schalter 54 und der Vollbrücke 50 geschaltet ist. Somit kann der erste Schalter 54 aus Sicht der Vollbrücke 50 den Eingang aus der Batterie 8 kurzschließen, während der zweite Schalter 56 (bei geöffneten ersten Schalter 54) die Vollbrücke 50 in den Strompfad der Batterie 8 legen kann. Werden in jedem Submodul 28 bis 32 die Schalter 54, 56 in gleicher Weise abwechselnd geöffnet und geschlossen, ist gemeinsam mit der Induktivität 26 ein Hochsetzsteller geschaffen, der die Summe der Teilspannungen 34 bis 38 höher setzt, als die Batteriespannung 20. Weiterhin kann durch die erste Halbbrücke 48 der Wechselrichter 50 auch dauerhaft aus der Reihenschaltung der drei Submodule 28 bis 32 entfernt werden, wenn der erste Schalter 54 dauerhaft geschlossen bleibt.

Die Vollbrücke 50 ist als Vierquadrantensteller ausgeführt, der eine erste und zweite nicht näher referenzierte Halbbrücke aufweist. Beide Halbbrücken sind im Wesentlichen analog zur ersten Halbbrücke aufgebaut. Die Teilspannung 34, die über den Zwischenkreiskondensator 52 stabilisiert wird, kann durch eine geeignete Ansteuerung der Vollbrücke 50 in eine Wechselspannung 58 umgewandelt werden. Die Wechselspannung 58 wird an die erste Last 10 angelegt und ruft einen entsprechenden Wechselstrom 60 durch die erste Last 10 hervor. Gibt die erste Last 10 elektrische Energie an die Vollbrücke 50 ab, so kann dieser den entsprechenden Leistungsfluss zurück in das erste Submodul 50 leiten. Die Ansteuerung der Vollbrücke 50 ist dem Fachmann bekannt und soll nachstehend nicht weiter erläutert werden.

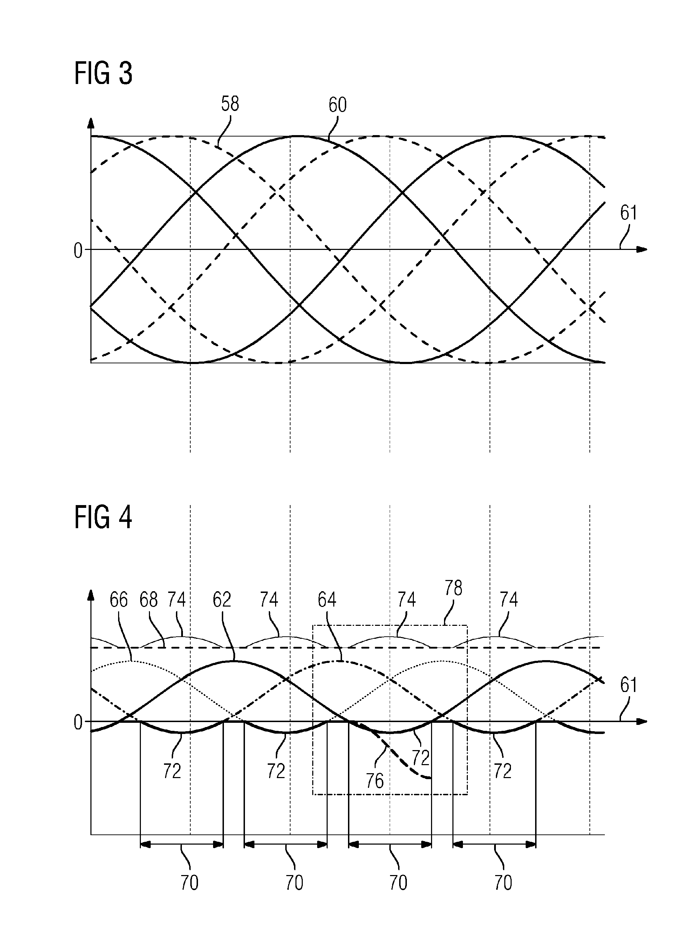

Es wird auf FIG 3 und 4 Bezug genommen, die schematische Diagramme zeigen, in denen Strom-, Spannungs- und Leistungsverläufe gemäß dem Stand der Technik über die Zeit 61 aufgetragen sind. In FIG 3 und 4 werden zu den FIG 1 und 2 gleiche Elemente mit gleichen Bezugszeichen versehen und nicht noch einmal beschrieben.

In FIG 3 und 4 sind die Wechselspannungen 58 und die Wechselströme 60 der gesamten Leistungsabgabe der Batterie 8 gegenübergestellt.

Die von der ersten Last 10 aufgenommene elektrische Leistung ist in FIG 4 mit dem Bezugszeichen 62 versehen, während die von der zweiten Last 12 aufgenommene elektrische Leistung mit dem Bezugszeichen 64 und die von der dritten Last 14 aufgenommene elektrische Leistung mit dem Bezugszeichen 66 versehen ist. Ferner sind in FIG 3 exemplarisch die Wechselspannung 58 und der Wechselstrom 60 mit einem Bezugszeichen versehen. Auf eine Referenzierung der Wechselspannungen und Wechselströme des zweiten und dritten Submoduls 30, 32 wird der Übersichtlichkeit halber verzichtet.

Es soll angenommen werden, dass die gesamte vom elektrischen Verbraucher 6 aufgenommene elektrische Wirkleistung auf einen Sollwert 68 geregelt wird. Diese Regelung legt die Richtung des Batteriestromes 22 fest, so dass diese nicht umgekehrt werden kann, da die Teilspannungen 34 bis 38 und damit die Batteriespannung 20 nicht ohne weiteres umkehrbar sind.

Da die Vollbrücke 50 in jedem Submodul 28 bis 32 jedoch eine Wechselspannung 60 an die elektrischen Lasten 10 bis 14 abgibt, tauschen die Submodule 28 bis 32 und die elektrischen Lasten 10 bis 14 nicht nur Wirkleistung sondern auch Blindleistung aus. Dies führt, wie in FIG 4 gezeigt, in bestimmten zeitlichen Abschnitten 70 dazu, dass ein negativer Leistungsfluss 72 zwischen einem der Submodule 28 bis 32 und der an das Submodul 28 bis 32 angeschlossenen Last 10 bis 14 auftritt - das heißt, das entsprechende Submodul 28 bis 32 nimmt elektrische Leistung von der angeschlossenen Last 10 bis 14 auf.

Da sich der Leistungsfluss von der Batterie zum Submodul 28 bis 32, wie bereits erwähnt, nicht umkehren lässt, kompensiert die Batterie 8 diesen negativen Leistungsfluss 72 von der Last 10 bis 14 in das Submodul 28 bis 32 durch eine über den Sollwert 68 hinausgehende Gesamtleistungszufuhr 74 in diesen zeitlichen Abschnitten 70. Mit anderen Worten nimmt das entsprechende Submodul 28 bis 32 einerseits elektrische Energie aus der Batterie 8 und andererseits elektrische Energie 76 aus seiner angeschlossenen Last 10 bis 14 auf und muss diese entsprechend im Zwischenkreiskondensator 52 speichern. Entsprechend groß muss der Zwischenkreiskondensator 52 dimensioniert sein.

In FIG 4 ist die elektrische Energie 76 aus der angeschlossenen Last 10 bis 14 angedeutet, die sich aus einer zeitlichen Integration des negativen Leistungsflusses 72 in dem entsprechenden zeitlichen Abschnitt 70 ergibt.

Um den Speicher für die elektrische Energie 76 während des negativen Leistungsflusses 72 aus dem Submodul 28 bis 32, also den Zwischenkreiskondensator 52, so klein wie möglich zu halten, wird vorgeschlagen, den negativen Leistungsfluss 72 aus den Submodulen 28 bis 32 abzuführen.

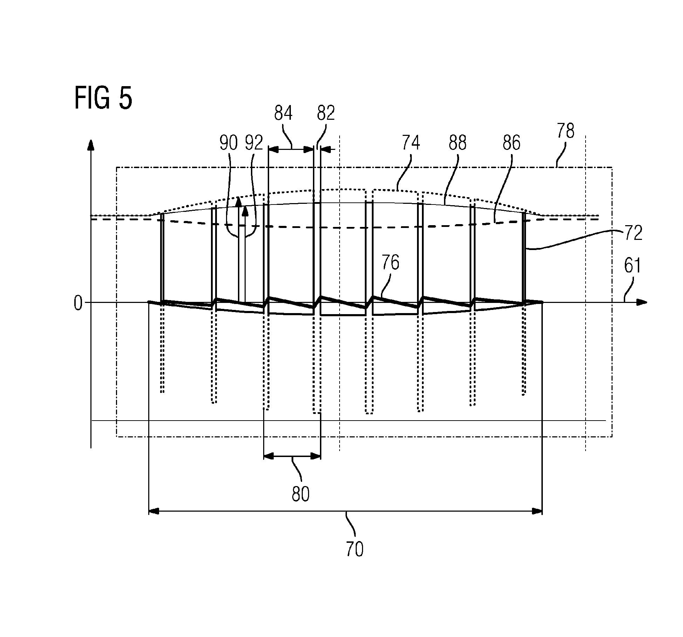

Dies wird anhand eines Ausschnitts 78 der FIG 4 näher erläutert, der in FIG 5 gezeigt ist. In FIG 5 werden zu FIG 4 gleiche Elemente mit gleichen Bezugszeichen versehen und nicht noch einmal beschrieben.

Wie in FIG 5 zu sehen, wird die Gesamtleistungszufuhr 74 aus der Batterie 8 zum elektrischen Verbraucher 6 innerhalb konstanter Zyklen 80 für eine erste Zeitdauer 82 umgekehrt. Das heißt, die Gesamtleistungszufuhr 74 wird umgedreht und fließt vom Verbraucher 6 zur Batterie 8. Wenn der elektrische Verbraucher 6 beispielsweise ein Motor ist, kann dies dadurch erreicht werden, dass der Motor über die erste Zeitdauer 82 als Generator betrieben wird. In der restlichen zweiten Zeitdauer 84 eines jeden Zyklus 80 verbleibt die Gesamtleistungszufuhr 74 positiv, das heißt von der Batterie 8 zum elektrischen Verbraucher 6.

Durch das Umkehren der Gesamtleistungszufuhr 74 während der ersten Zeitdauer 82 kehrt sich auch der durch die Blindleistung bewirkte negative Leistungsfluss 72 um. Dies führt wie aus FIG 5 ersichtlich dazu, dass dem Zwischenkreiskondensator 52 eine elektrische Energie 76 zugeführt wird, die ein im Vergleich zu FIG 4 umgekehrtes Vorzeichen besitzt. Auf diese Weise wird der Zwischenkreiskondensator 52 in den einzelnen Zyklen 80 konstant geladen und entladen, wodurch in FIG 5 der Maximalbetrag der zu speichernden Energie 76 um ein Vielfaches geringer ist, als in FIG 4.

Im Folgenden wird der Tastgrad 86 (duty cycle) der Gesamtleistungszufuhr 74 als das Verhältnis zwischen der zweiten Zeitdauer 84 zur Gesamtzeitdauer eines Zyklus 80 betrachtet. Dieser Tastgrad 86 kann beliebig, also beispielsweise konstant, gewählt werden.

Besonders bevorzugt ergibt sich der Tastgrad 86 in der vorliegenden Ausführung jedoch aus einer Pulsweitenmodulation der Mittelwertsleistung 88, die dem elektrischen Verbraucher 6 im zeitlichen Mittel zugeführt wird. Da die Pulsweitenmodulation dem Fachmann an sich bekannt ist, soll auf eine nähere Darstellung im Folgenden verzichtet werden.

Wie in FIG 5 zu sehen, sind die Momentanwerte 90 der Gesamtleistungszufuhr 74 in der zweiten Zeitdauer 84 größer als die Momentanwerte 92 der Mittelwertsleistung 88.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Verfahren zum Ansteuern einer Stromrichterschaltung (4) mit wenigstens zwei Submodulen (28,30,32) in Reihenschaltung, die über eine Induktivität (26) elektrische Leistung aus einer eine Gleichspannung abgebenden Leistungsquelle (8) bezieht, wobei jedes Submodul (28,30,32) eingangsseitig eine einphasige Halbbrücke (48) und lastseitig eine einphasige Vollbrücke (50) aufweist, und wobei die Halbbrücke (48) und die Vollbrücke (50) gleichspannungsseitig sowie parallel hierzu ein Zwischenkreiskondensator (24) geschaltet sind,
**gekennzeichnet durch**
- Regeln eines Stromes (22) aus der elektrischen Leistungsquelle (8) basierend auf der von den Vollbrücken (50) der Submodule (28,30,32) an die elektrischen Lasten (10,12, 14) abzugebenden elektrischen Leistung (74),
- Erfassen eines negativen Leistungsflusses (72) aus einer elektrischen Last (10,12,14) in den jeweils angeschlossenen Wechselrichter (50) und
- zeitweises Rückführen der elektrischen Leistung (74) aus den Vollbrücken (50) in Richtung der elektrischen Leistungsquelle (8), während der negative Leistungsfluss (72) erfasst wird.

2. Verfahren nach Anspruch 1, umfassend Umkehren des Stromes (22) aus der Leistungsquelle (8) zum Rückführen der elektrischen Leistung (74) aus den Vollbrücken (50) der Submodule (28, 30, 32).

3. Verfahren nach Anspruch 2, wobei die Beträge der Amplituden des Stromes bei der Stromumkehr gleich sind.

4. Verfahren nach einem der vorstehenden Ansprüche, umfassend Betreiben der elektrischen Lasten (10,12,14) als Generatoren zum Rückführen der elektrischen Leistung (74).

5. Verfahren nach einem der vorstehenden Ansprüche, wobei das zeitweise Rückführen der elektrischen Leistung (74) aus den Vollbrücken (50) der Submodule (28,30,32) in zyklischen Abständen (80) durchgeführt wird.

6. Verfahren nach Anspruch 5, wobei die zyklischen Abstände (80) konstant sind.

7. Verfahren nach Anspruch 5 oder 6, wobei die zeitliche Dauer (84) der Rückführung der elektrischen Leistung (74) in jedem Zyklus (80) abhängig von der abzugebenden elektrischen Leistung (88) aus der elektrischen Leistungsquelle (8) ist.

8. Verfahren nach Anspruch 7, wobei die Dauer (84) mit der Leistungsabgabe (88) der elektrischen Leistungsquelle(8) steigt.

9. Verfahren nach einem der vorstehenden Ansprüche, umfassend
- Erfassen einer elektrischen Energie (76), die in einem der Zwischenkreiskondensatoren (52) gespeicherten ist, der im mit der Vollbrücke (50) mit dem negativen Leistungsfluss (72) verbunden ist und
- Rückführen von elektrischer Leistung (74), wenn die gespeicherte elektrische Energie (76) einen bestimmten Wert übersteigt.

10. Verfahren nach Anspruch 9, umfassend Beenden der Rückführung der elektrischen Leistung (74), wenn die wenn die gespeicherte elektrische Energie (76) einen weiteren Wert unterschreitet.

11. Verfahren nach einem der vorstehenden Ansprüche, wobei Momentanwerte (90) der elektrischen Leistung (74) aus der elektrischen Leistungsquelle (8) während des negativen Leistungsflusses (72) größer sind, als während eines positiven Leistungsflusses.

12. Vorrichtung zur Durchführung eines Verfahrens nach einem der vorstehenden Ansprüche.

13. Stromrichterschaltung (4) mit wenigstens zwei Submodulen (28,30,32) in Reihenschaltung, die über eine Induktivität (26) elektrische Leistung aus einer eine Gleichspannung abgebenden Leistungsquelle (8) bezieht, wobei jedes Submodul (28,30,32) eingangsseitig eine einphasige Halbbrücke (48) und lastseitig eine einphasige Vollbrücke (50) aufweist, und wobei die Halbbrücke (48) und die Vollbrücke (50) gleichspannungsseitig sowie parallel hierzu ein Zwischenkreiskondensator (24) geschaltet sind, **gekennzeichnet durch** eine Vorrichtung nach Anspruch 12.

14. Stromrichterschaltung (4) nach Anspruch 13, umfassend eine eingangsseitig zur elektrischen Leistungsquelle (8) verschaltete Kapazität (24) zum Aufnehmen der rückgespeisten elektrischen Leistung (74).

15. Fahrzeug umfassend einen elektrischen Antrieb (6), eine elektrische Leistungsquelle (8) und eine Stromrichterschaltung (4) nach Anspruch 13 oder 14 zum Anpassen der elektrischen Leistung (74) aus der elektrischen Leistungsquelle (8) für den elektrischen Antrieb (6).
